# FASCICULE DE BREVET EUROPEEN

(11) **EP 0 908 375 B1**
(45) Date de publication et mention de la délivrance du brevet: **10.04.2002**
(21) Numéro de dépôt: 98402506.4
(22) Date de dépôt: 08.10.1998
(51) Int. Cl.: B62D 25/08

(54) **Dispositif de fixation d'une façade avant à la structure avant d'un véhicule automobile**
Vorrichtung zur Befestigung einer Vorderfront an einem Vorderbau eines Kraftfahrzeuges
Means for fixing a front end to the forward structure of a motor vehicle

(30) Priorité: 09.10.1997 FR 9712617
(43) Date de publication de la demande: 14.04.1999
(73) Titulaire: AUTOMOBILES PEUGEOT, 75116 Paris (FR); AUTOMOBILES CITROEN, 92200 Neuilly-sur-Seine (FR)
(72) Inventeur: Ory, Patrick, 78200 Mantes la Ville (FR)
(74) Mandataire: Thinat, Michel

(56) Documents cités:
- EP-A- 0 178 266
- DE-C- 4 336 030
- FR-A- 2 646 823
- US-A- 5 271 473

## Description

La présente invention concerne un dispositif de fixation d'une façade avant à la structure avant d'un véhicule automobile.

On connaît par le document FR-A-2 646 823 une structure avant d'un véhicule automobile formant un ensemble mécanique comprenant le moteur, son berceau, les liaisons au sol, la transmission, la direction et deux brancards parallèles associés au berceau.

Selon cette structure connue, un cadre formant la façade avant comprenant notamment un radiateur vertical, un groupe moto-ventilateur, un condenseur, est fixé de façon détachable aux extrémités avant des brancards de manière à permettre l'extraction du groupe moto-propulseur par l'avant du véhicule.

Cependant, cette structure connue a pour inconvénient majeur que l'ensemble constituant la façade avant est lourd de sorte qu'il est nécessaire de prévoir au moins deux personnes pour le démontage de la façade avant et la dépose de cette façade sur un moyen de transport roulant, tel qu'un chariot.

L'invention propose un dispositif de fixation d'une façade avant à la structure avant d'un véhicule automobile agencé de manière à faciliter l'accès au groupe moto-propulseur du véhicule lors de l'assemblage de pièces sur la chaîne de montage ou pour un démontage de ce groupe ou effectuer des réparations de celui-ci.

A cet effet, le dispositif de fixation de l'invention est caractérisé en ce qu'il comprend au moins deux pieds de fixation solidaires de la façade avant sensiblement perpendiculairement au plan médian longitudinal de celle-ci et pouvant s'engager amoviblement respectivement dans deux boutonnières verticales réalisées dans la structure avant.

De préférence, chaque pied de fixation est de forme générale cylindrique et comprend deux portions cylindriques respectivement de petit diamètre et de grand diamètre avec la portion de petit diamètre adjacente à la façade avant et chaque boutonnière comprend deux parties respectivement supérieure de grande largeur et inférieure de petite largeur, la partie de grande largeur de chaque boutonnière permettant l'introduction et le passage de la portion de grand diamètre du pied de fixation correspondant jusqu'à une position intermédiaire d'appui sur la portion de liaison entre les deux parties de grande et petite largeurs de la boutonnière et la portion de petit diamètre du pied de fixation peut être engagée au moins légèrement à force dans la partie de petite largeur de la boutonnière à partir de la position intermédiaire du pied de fixation en exerçant sur la façade avant un effort de poussée vers la structure avant pour désengager la portion de grand diamètre du pied de fixation de la partie de grande largeur de la boutonnière et un effort vertical descendant de manière à bloquer la façade avant à la structure avant.

Chaque pied de fixation comprend un collet à l'extrémité de la portion de grand diamètre opposée à la façade avant empêchant un déplacement sensiblement horizontal de la façade avant hors de la structure avant lorsque les pieds de fixation occupent la position intermédiaire précitée.

Chaque pied de fixation comprend également un épaulement entre les deux portions de grand et petit diamètres empêchant un déplacement sensiblement horizontal de la façade avant hors de la structure avant lorsque la portion de petit diamètre est engagée dans la partie de petite largeur de la boutonnière.

La façade avant est de plus fixée à la structure avant par des vis de fixation traversant la façade avant et s'engageant respectivement dans des écrous de blocage solidaires de la structure avant.

La façade avant est fixée dans une paroi frontale de la structure avant par deux pattes supérieures et deux pattes inférieures de la paroi frontale et les deux pattes supérieures présentent chacune la forme d'un profil en équerre dont la paroi verticale comporte la boutonnière précitée et, sous celle-ci, l'écrou de blocage de la vis de fixation correspondante, fixé par soudage à la face arrière de la paroi verticale.

La paroi horizontale de chaque patte supérieure comprend une fenêtre débouchant dans la partie de grande largeur de la boutonnière et permettant l'engagement verticalement vers le bas de la portion de grand diamètre et du collet du pied de fixation correspondant.

La façade avant comprend deux parois latérales verticales comportant des trous de passage des vis de fixation venant en regard des écrous de blocage des pattes supérieures et inférieures de la paroi frontale de la structure avant en position de blocage des pieds de fixation dans les parties de petite largeur des boutonnières et les deux pieds de fixation sont solidaires chacun de la face interne de la paroi latérale correspondante de la façade en haut de celle-ci.

La façade avant est réalisée en un matériau à base de matière plastique et les deux pieds de fixation sont intégrés par moulage à celle-ci.

Selon une variante de réalisation, la façade avant est en métal et les deux pieds de fixation sont fixés à celle-ci par vissage ou par soudage.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :

La figure 1 est une vue en perspective éclatée d'une structure avant de véhicule à façade avant conforme à l'invention.

La figure 2 est une vue en perspective agrandie de la partie cerclée en II de la figure 1.

La figure 3 représente en perspective un pied de fixation utilisé pour fixer amoviblement la façade avant à la structure avant du véhicule.

La figure 4 est une vue en perspective agrandie de la partie cerclée en IV de la figure 1.

Les figures 5A à 5C représentent les différentes phases de montage d'une partie de la façade avant à une partie correspondante de la structure avant du véhicule.

La figure 6 est une vue en section dans le plan vertical contenant la ligne VI-VI de la figure 5B.

La figure 7 est une vue en section dans le plan vertical contenant la ligne VII-VII de la figure 5C.

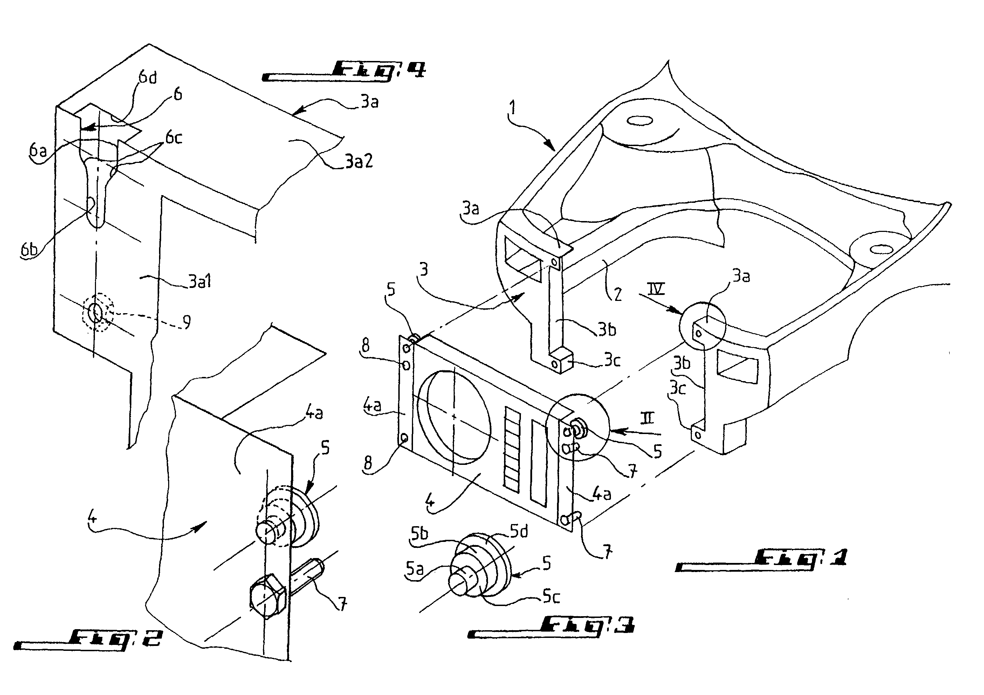

En se reportant tout d'abord à la figure 1, la référence 1 désigne une structure avant de véhicule automobile comprenant essentiellement deux brancards sensiblement parallèles 2, dont un seul est visible, associés à un berceau (non représenté) recevant notamment le groupe moto-propulseur, également non représenté, du véhicule.

La structure avant 1 comprend une paroi frontale verticale 3 reliée aux extrémités des deux brancards 2 et à laquelle est fixée une façade avant 4 qui, comme cela est connu en soi, supporte notamment le radiateur vertical, le groupe moto-ventilateur, le condenseur, etc, non représentés. La façade 4 présente la forme générale d'un parallélépipède rectangle.

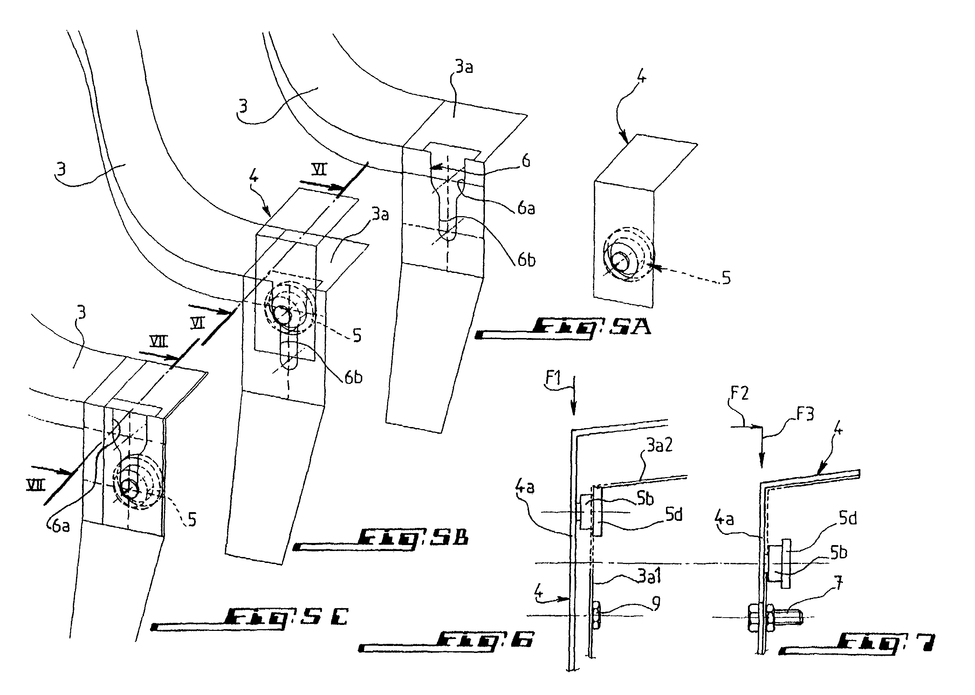

Selon l'invention, le dispositif de fixation de la façade avant 4 à la structure 1 du véhicule comprend, comme cela est mieux visible sur les figures 2 à 7, deux pieds de fixation 5 solidaires de chaque côté de la façade avant 4 en partie supérieure de celle-ci et s'étendant sensiblement perpendiculairement du plan médian longitudinal de la façade 4. Lorsque la façade 4 est réalisée en un matériau à base de matière plastique, les deux pieds de fixation 5 viennent de matière avec celle-ci, tandis que lorsque la façade 4 est métallique, les pieds de fixation 5 sont fixés à la façade 4 par vissage ou par soudage.

Les deux pieds de fixation 5, qui sont situés au même niveau suivant la longueur de la façade 4, peuvent s'engager amoviblement respectivement dans deux boutonnières verticales 6 de la paroi frontale 3 de la structure 1.

De préférence, chaque pied de fixation 5 est de forme générale cylindrique et comprend deux portions cylindriques, une portion de petit diamètre 5a adjacente à la façade 4 et dont l'extrémité est fixée en partie supérieure de la face interne de la paroi latérale verticale plane correspondante 4a de la façade 4, et une portion de plus grand diamètre 5b prolongeant la portion de petit diamètre 5a en définissant entre elles un épaulement 5c. La portion cylindrique de grand diamètre 5b se termine à son extrémité libre opposée à la paroi latérale 4a de la façade 4 par un collet 5d d'un diamètre supérieur à celui de la portion de grand diamètre 5b.

Chaque boutonnière 6 comprend deux parties respectivement supérieure 6a de grande largeur et inférieure 6b de petite largeur en prolongement l'une de l'autre et raccordées entre elles par deux bords de liaison 6c s'évasant de bas en haut. Comme représenté, chaque boutonnière 6 est réalisée à travers la paroi verticale 3a1 d'une patte supérieure 3a de la paroi 3 et ayant la forme d'un profilé en équerre. La figure 1 montre que les deux pattes de fixation 3a sont situées en regard l'une de l'autre en partie supérieure respectivement de deux parois latérales verticales 3b définissant entre elles un passage dans la paroi 3 qui est fermée en position montée de la façade 4 à la paroi 3. Cette figure montre également que deux pattes inférieures de fixation 3c, en regard l'une de l'autre, sont solidaires de la partie inférieure respectivement des deux parois latérales 3b. Les pattes de fixation 3a, 3c de la façade avant 4 sont sensiblement perpendiculaires aux parois latérales 3b. La figure 4 montre que chaque patte de fixation 3a comporte une fenêtre 6d réalisée à travers la paroi horizontale 3a2 de la patte 3a de manière à déboucher en partie supérieure de la partie de grande largeur 6a de la boutonnière 6.

Le montage de la façade avant 4 à la paroi 3 de la structure 1 résulte déjà en partie de la description qui précède et va être maintenant expliqué en se référant notamment aux figures 5A à 5C.

La figure 5A montre la partie supérieure gauche de la façade avant 4 destinée à être montée, par le pied de fixation correspondant 5, à la patte supérieure gauche, par rapport à la figure 1, de la paroi frontale 3.

L'opérateur saisit la façade avant 4 pour la présenter verticalement face à la paroi 3 avec les deux pieds de fixation 5 disposés respectivement au-dessus des deux fenêtres 6d. Ensuite, par un mouvement de descente verticale suivant la flèche F1 en figure 6, l'opérateur introduit la portion de grand diamètre 5b et le collet 5d respectivement dans la partie de grande largeur 6a et la fenêtre 6d de la boutonnière correspondante 6 jusqu'à ce que la portion de grand diamètre 5b, dont le diamètre est inférieur à la largeur de la partie 6a de la boutonnière 6, vienne en appui sur les deux bords de liaison 6c de cette boutonnière de sorte que la façade avant occupe une position de maintien intermédiaire définie en figure 5B. De la sorte, l'opérateur est libre de ses mouvements et la façade avant 4 est maintenue par son propre poids en butée sur les boutonnières 6. Il est à noter que les collets 5d empêchent tout déplacement horizontal de la façade 4 hors de la structure.

Ensuite, l'opérateur pousse la façade avant 4 vers la structure 1, c'est-à-dire vers l'arrière du véhicule comme indiqué par la flèche F2 en figure 7, de manière à déplacer axialement chaque portion de grand diamètre 5b du pied 5 dans le même sens et la désengager des deux bords intermédiaires 6c de la boutonnière jusqu'à ce que la portion de petit diamètre 5a du pied 5 tombe sur la partie de petite largeur 6b de la boutonnière 6. Le jeu existant entre la portion de petit diamètre 5a et la partie de petite largeur 6b est ajusté de manière que l'opérateur doit exercer un effort vertical vers le bas, suivant la flèche F3 de la figure 7, pour enfoncer au moins légèrement à force chaque portion de petit diamètre 5a à travers la partie de faible largeur 6b jusqu'à ce que la portion 5a vienne en butée au fond de la partie de boutonnière 6b. Si nécessaire, ce mouvement de descente verticale des pieds de fixation 5 dans leurs parties 6b des boutonnières respectives 6 peut s'effectuer à l'aide d'un outil approprié. Les épaulements 5c des pieds 5 empêchent tout déplacement horizontal de la façade 4 hors de la structure 1. A cette position finale de montage de la façade 4, celle-ci peut être fixée à la paroi frontale 3 par des vis de fixation 7, par exemple au nombre de quatre, traversant des trous correspondants supérieurs et inférieurs 8 des deux parois latérales 4a de la façade 4 et les pattes supérieures 3a et inférieures 3c en s'engageant dans des écrous de blocage respectifs 9 solidaires de ces pattes, les deux écrous supérieurs 9 étant situés sous les boutonnières 6. Lorsque les pattes 3a et 3c sont réalisées en un profilé en équerre, chaque écrou de blocage 9 est fixé par soudage à la face interne de la paroi verticale de la patte correspondante 3a, 3c.

Le dispositif de fixation de l'invention permet la manutention aisée de la façade avant et l'opérateur a les mains libres pour fixer les vis de fixation 7 de la façade 4 à la paroi frontale 3 de la structure avant 1. Lors du montage de la façade avant, toute chute de celle-ci est empêchée, la protégeant ainsi efficacement et constituant également une sécurité pour l'opérateur. Le positionnement de la façade 4 relativement à la structure 1 est simplifié et garanti et le nombre de pièces permettant le centrage et le maintien de la façade est extrêmement réduit. Enfin, le démontage de la façade 4 est extrêmement aisé puisqu'il suffit tout d'abord de démonter les vis de fixation 7 et de soulever, si nécessaire à l'aide d'un outil approprié, la façade 4 verticalement de bas en haut pour dégager les pieds de fixation 5 de leurs boutonnières respectives 6.

## Revendications

1. Dispositif de fixation d'une façade avant (4) à la structure avant (1) d'un véhicule automobile, **caractérisé en ce qu'**il comprend au moins deux pieds de fixation (5) solidaires de la façade avant sensiblement perpendiculairement au plan médian longitudinal de celle-ci et pouvant s'engager amoviblement respectivement dans deux boutonnières verticales (6) réalisées dans la structure avant (1).

2. Dispositif selon la revendication 1, **caractérisé en ce que** chaque pied de fixation (5) est de forme générale cylindrique et comprend deux portions cylindriques respectivement de petit diamètre (5a) et de grand diamètre (5b) avec la portion de petit diamètre (5a) adjacente à la façade avant (4) et chaque boutonnière (6) comprend deux parties respectivement supérieure de grande largeur (6a) et inférieure de petite largeur (6b), la partie de grande largeur (6a) de chaque boutonnière (6) permettant l'introduction et le passage de la portion de grand diamètre (5b) du pied de fixation corespondant (5) jusqu'à une position intermédiaire d'appui sur la portion de liaison (6c) entre les deux parties de grande et petite largeurs (6a, 6b) de la boutonnière (6) et la portion de petit diamètre (5a) du pied de fixation (5) peut être engagée au moins légèrement à force dans la partie de petite largeur (6b) de la boutonnière (6) à partir de la position intermédiaire du pied de fixation (5) en exerçant sur la façade avant (4) un effort de poussée vers la structure avant (1) pour désengager la partie de grand diamètre (5b) de la partie de grande largeur (6a) de la boutonnière (6) et un effort vertical descendant de manière à bloquer la façade avant (4) à la structure avant (1).

3. Dispositif selon la revendication 2, **caractérisé en ce que** chaque pied de fixation (5) comprend un collet (5d) à l'extrémité de la portion de grand diamètre opposée à la façade avant (4) et empêchant un déplacement sensiblement horizontal de la façade avant (4) hors de la structure avant (1) lorsque les pieds de fixation (5) occupent la position intermédiaire.

4. Dispositif selon la revendication 2 ou 3, **caractérisé en ce que** chaque pied de fixation (5) comprend un épaulement (5c) entre les deux portions de grand et petit diamètres (5a, 5b) empêchant un déplacement sensiblement horizontal de la façade avant (4) hors de la structure avant (1) lorsque la portion de petit diamètre (5a) est engagée dans la partie de petite largeur (6b) de la boutonnière (6).

5. Dispositif selon l'une des revendications précédentes, **caractérisé en ce que** la façade avant (4) est fixée à la structure avant (1) par des vis de fixation (7) traversant la façade avant (4) et s'engageant respectivement dans des écrous de blocage (9) solidaires de la structure avant (1).

6. Dispositif selon l'une des revendications précédentes, **caractérisé en ce que** la façade avant (4) est fixée dans une paroi frontale (3) de la structure avant (1) par deux pattes supérieures (3a) et deux pattes inférieures (3c) de la paroi frontale (3) et **en ce que** les deux pattes supérieures (3a) présentent chacune la forme d'un profilé en équerre dont la paroi verticale (3a1) comporte la boutonnière (6) et, sous celle-ci, l'écrou de blocage (9) de la vis de fixation correspondante (7) fixé par soudage à la face arrière de la paroi verticale (3a1).

7. Dispositif selon la revendication 6, **caractérisé en ce que** la paroi horizontale (3a2) de chaque patte supérieure (3a) comprend une fenêtre (6d) débouchant dans la partie de grande largeur (6a) de la boutonnière (6) et permettant l'engagement verticalement vers le bas de la portion de grand diamètre (5b) et du collet (5d) du pied de fixation correspondant (5).

8. Dispositif selon la revendication 6 ou 7, **caractérisé en ce que** la façade avant (4) comprend deux parois latérales verticales (4a) comportant des trous (8) de passage des vis de fixation (7) venant en regard des écrous de blocage (9) des pattes supérieures et inférieures (3a, 3c) de la paroi frontale (3) en position de blocage des pieds de fixation (5) dans les parties de petite largeur (6b) de la boutonnière (6) et les deux pieds de fixation (5) sont solidaires chacun de la face interne de la paroi latérale correspondante (4a) de la façade (4) en haut de celle-ci.

9. Dispositif selon l'une des revendications précédentes, **caractérisé en ce que** la façade avant (4) est réalisée en un matériau à base de matière plastique et les deux pieds de fixation (5) sont intégrés par moulage à celle-ci.

10. Dispositif selon l'une des revendications 1 à 8, **caractérisé en ce que** la façade avant (4) est en métal et les deux pieds de fixation (5) sont fixés à celle-ci par vissage ou par soudage.

## Claims

1. Means for fixing a front end (4) to the forward structure (1) of a motor vehicle, **characterized in that** it comprises at least two fixing feet (5) rigidly secured to the front end substantially perpendicularly to the longitudinal median plane thereof and able to be removably engaged respectively in two vertical button holes (6) made in the forward structure (1).

2. Device according to claim 1, **characterized in that** each fixation foot (5) has a generally cylindrical shape and comprises two cylindrical portions, one (5a) of a small diameter and one (5b) of a great diameter, respectively, with the small diameter portion (5a) being adjacent to the front end (4) and each button hole (6) comprises two parts, an upper one (6a) of a great width and a lower one (6b) of a small width, respectively, the great width part (6a) of each button hole (6) enabling introduction and passage of the great diameter portion (5b) of the corresponding fixation foot (5) up to an intermediate position bearing on the connecting portion (6c) between the two great and small width parts (6a, 6b) of the button hole (6) and the small diameter portion (5a) of the fixation foot (5) may be at least slightly force engaged in the small width part (6b) of the button hole (6) from the intermediate position of the fixation foot (5) by exerting on the front end (4) a pushing effort towards the forward structure (1) for disengaging the great diameter part (5b) from the great width part (6a) of the button hole (6) and an upward vertical effort in order to lock the front end (4) to the forward structure (1).

3. Device according to claim 2, **characterized in that** each fixation foot (5) comprises a collar (5d) at the end of the great diameter portion opposite to the front end (4) and preventing a substantially horizontal movement of the front end (4) out of the forward structure (1) when the fixation feet (5) are in the intermediate position.

4. Device according to claim 2 or 3, **characterized in that** each fixation foot (5) comprises a shoulder (5c) between the two great and small diameter portions (5a, 5b) preventing a substantially horizontal movement of the front end (4) out of the forward structure (1) when the small diameter portion (5a) is engaged in the small width part (6b) of the button hole (6).

5. Device according to one of the preceding claims, **characterized in that** the front end (4) is secured to the forward structure (1) by means of fixation screws (7) crossing the front end (4) and being engaged respectively in locking bolts (9) rigidly secured to the forward structure (1).

6. Device according to one of the preceding claims, **characterized in that** the front end (4) is secured in a front wall (3) of the forward structure (1) by means of two upper tabs (3a) and two lower tabs (3c) of the front wall (3) and **in that** each of the two upper tabs (3a) has the shape of an angle profiled member having a vertical wall (3a1) which comprises the button hole (6) and, under it, the locking bolt (9) for the corresponding fixation screw (7) secured by welding to the rear face of the vertical wall (3a1).

7. Device according to claim 6, **characterized in that** the horizontal wall (3a2) of each upper tab (3a) comprises a window (6d) opening in the great width part (6a) of the button hole (6) and enabling a vertical downward engagement of the great diameter portion (5b) and of the collar (5d) of the corresponding fixation foot (5).

8. Device according to claim 6 or 7, **characterized in that** the front end (4) comprises two vertical lateral walls (4a) with holes (8) for passing fixation screws (7) coming to face the locking bolts (9) of the upper and lower tabs (3a, 3c) of the front wall (3) in a locking position of the fixation feet (5) in the small width parts (6b) of the button hole (6) and each of the two fixation feet (5) are rigidly secured to the inner face of the corresponding lateral wall (4a) of the front end (4) at the top thereof.

9. Device according to one of the preceding claims, **characterized in that** the front end (4) is made of a plastics based material and the two fixation feet (5) are rigidly secured thereto by moulding.

10. Device according to one of claims 1 to 8, **characterized in that** the front end (4) is made of metal and the two fixation feet (5) are secured thereto by screwing or welding.

## Patentansprüche

1. Vorrichtung zur Befestigung einer Vorderfront (4) an einem Vorderbau (1) eines Kraftfahrzeugs, **dadurch gekennzeichnet, dass** sie wenigstens zwei Befestigungsfüße (5) umfasst, die mit der Vorderfront deutlich senkrecht zur mittleren Längsebene derselben fest verbunden sind und abnehmbar jeweils in zwei vertikale längliche Aussparungen (6) eingreifen können, die in der Vorderfront (1) realisiert sind.

2. Vorrichtung gemäß Anspruch 1, **dadurch gekennzeichnet, dass** jeder Befestigungsfuß (5) in allgemeiner zylindrischer Form ist und zwei zylindrische Abschnitte aufweist, jeweils mit kleinem Durchmesser (5a) und großem Durchmesser (5b), wobei der Abschnitt mit kleinem Durchmesser (5a) an der Vorderfront (4) anliegt und jede längliche Aussparung (6) zwei Teile umfasst, jeweils den oberen mit großer Breite (6a) und den unteren mit kleiner Breite (6b), wobei der Teil mit großer Breite (6a) jeder länglichen Aussparung (6) die Einführung und den Durchgang des Abschnitts mit großem Durchmesser (5b) des entsprechenden Befestigungs-fußes (5) bis zu einer Zwischenposition zum Abstützen auf dem Verbindungsteil (6c) zwischen den zwei Teilen mit großer und kleiner Breite (6a, 6b) der länglichen Aussparung (6) erlaubt, und der Abschnitt mit kleinem Durchmesser (5a) des Befestigungsfußes (5) kann wenigstens leicht unter Kraftaufwendung in den Teil mit kleiner Breite (6b) der länglichen Aussparung (6) ausgehend von der mittleren Position des Befestigungsfußes (5) durch Ausüben einer Schubkraft zum Vorderbau (1) auf die Vorderfront (4) eingreifen, um den Teil mit großem Durchmesser (5b) des Teils mit großer Breite (6a) der länglichen Aussparung (6) loszulösen, und einer vertikalen Kraft, die derart von oben nach unten wirkt, dass die Vorderfront (4) am Vorderbau (1) blockiert wird.

3. Vorrichtung gemäß Anspruch 2, **dadurch gekennzeichnet, dass** jeder Befestigungsfuß (5) einen Bundring (5d) am äußeren Ende des Abschnitts mit großem Durchmesser gegenüber der Vorderfront (4) umfasst und dabei eine deutlich horizontale Verschiebung der Vorderfront (4) außerhalb des Vorderbaus (1) verhindert, wenn die Befestigungsfüße (5) die mittlere Position einnehmen.

4. Vorrichtung gemäß Anspruch 2 oder 3, **dadurch gekennzeichnet, dass** jeder Befestigungsfuß (5) einen Absatz (5c) zwischen den zwei Abschnitten mit großem und kleinem Durchmesser (5a, 5b) umfasst und dabei eine deutlich horizontale Verschiebung der Vorderfront (4) außerhalb des Vorderbaus (1) verhindern, wenn der Abschnitt mit kleinem Durchmesser (5a) im Teil mit kleiner Breite (6b) der länglichen Aussparung (6) eingreift.

5. Vorrichtung gemäß einem der vorgenannten Ansprüche, **dadurch gekennzeichnet, dass** die Vorderfront (4) am Vorderbau (1) durch Befestigungsschrauben (7) befestigt ist, die die Vorderfront (4) durchqueren und jeweils in die Sicherungsmuttern (9) eingreifen, die mit dem Vorderbau (1) fest verbunden sind.

6. Vorrichtung gemäß einem der vorgenannten Ansprüche, **dadurch gekennzeichnet, dass** die Vorderfront (4) in einer Vorderseite (3) des Vorderbaus (1) durch zwei obere Klauen (3a) und zwei untere Klauen (3c) der Vorderseite (3) befestigt ist und dass die zwei oberen Klauen (3a) jede die Form eines Winkelprofils aufweisen, deren vertikale Wand (3a1) die längliche Aussparung (6) umfasst und unter dieser die Sicherungsmutter (9) der entsprechenden Befestigungsschraube (7) durch Verschweißen auf der Rückseite der vertikalen Wand (3a1) befestigt ist.

7. Vorrichtung gemäß Anspruch 6, **dadurch gekennzeichnet, dass** die horizontale Wand (3a2) jeder oberen Klaue (3a) ein Fenster (6d) umfasst, das in den Teil mit großer Breite (6a) der länglichen Aussparung (6) einmündet und damit die vertikale Freisetzung nach unten des Abschnitts mit großem Durchmesser (5b) und des Bundrings (5d) des entsprechenden Befestigungsfußes (5) erlaubt.

8. Vorrichtung gemäß Anspruch 6 oder 7, **dadurch gekennzeichnet, dass** die Vorderfront (4) zwei vertikale Seitenwände (4a) umfasst, die Löcher (8) zum Durchgang der Befestigungsschrauben (7) umfassen, die den Sicherungsmuttern (9) der oberen und unteren Klauen (3a, 3c) der Vorderfront (3) in der Blockierposition der Befestigungsfüße (5) in den Teilen mit großer Breite (6b) der länglichen Aussparung (6) gegenüber liegen, und die zwei Befestigungsfüße (5) sind jeder mit der Innenseite der entsprechenden Seitenwand (4a) der Front (4) fest verbunden, die über dieser liegt.

9. Vorrichtung gemäß einem der vorgenannten Ansprüche, **dadurch gekennzeichnet, dass** die Vorderfront (4) aus einem Material auf Plastikbasis realisiert ist und die zwei Befestigungs-füße (5) durch Abformen in dieses integriert sind.

10. Vorrichtung gemäß Anspruch 1 bis 8, **dadurch gekennzeichnet, dass** die Vorderfront (4) aus Metall ist und die zwei Befestigungsfüße (5) an dieser durch Verschraubung oder durch Verschweißung befestigt sind.
